# EUROPÄISCHE PATENTSCHRIFT

(11) **EP 4 029 664 B1**
(45) Veröffentlichungstag und Bekanntmachung des Hinweises auf die Patenterteilung: **11.12.2024**
(21) Anmeldenummer: 22150900.3
(22) Anmeldetag: 11.01.2022
(51) Int. Cl.: B25J 15/06, B65G 47/91

(54) **SAUGGREIFER**
SUCTION GRIPPER
PINCE ASPIRANTE

(30) Priorität: 14.01.2021 DE 102021100648
(43) Veröffentlichungstag der Anmeldung: 20.07.2022
(73) Patentinhaber: J. Schmalz GmbH, 72293 Glatten (DE)
(72) Erfinder: Kuolt, Harald, 78586 Deilingen (DE); Speck, Thomas, 79227 Schallstadt (DE); Poppinga, Simon, 79117 Freiburg (DE); Kampowski, Tim, 79106 Freiburg (DE)
(74) Vertreter: DREISS Patentanwälte PartG mbB

(56) Entgegenhaltungen:
- WO-A1-2022/020176
- JP-B2- 5 950 995

## Beschreibung

Die Erfindung betrifft einen Sauggreifer zum Ansaugen eines Gegenstands gemäß dem Oberbegriff des Anspruchs 1.

Sauggreifer der eingangs genannten Art dienen in der Regel zum Ansaugen eines Gegenstands bei der Handhabung mittels einer Handhabungsvorrichtung. Die Sauggreifer haben einen Saugkörper, der einen Sauginnenraum begrenzt und eine Saugöffnung aufweist. Der Sauggreifer wird, bspw. mit einem Dichtabschnitt, zum Ansaugen an dem Gegenstand angelegt. Der Sauggreifer wird mittels eines an dem Saugkörper angeordneten Anschlussnippels an der Handhabungsvorrichtung angeschlossen. Die Handhabungsvorrichtung ermöglicht demnach das Handhaben des von dem Sauggreifer angesaugten Gegenstands.

In einem passiven Betrieb des Sauggreifers wird der Sauggreifer bspw. mit einem Dichtabschnitt auf einer Oberfläche des Gegenstands angelegt und angedrückt, z.B. indem eine äußere Druckkraft auf den Sauggreifer aufgebracht wird. Hierbei kann z.B. vorgesehen sein, dass ein Teil der im Sauginnenraum befindlichen Luft entweicht und bei Entspannung des Saugkörpers ein initialer, vergleichsweise geringer Ansaugunterdruck im Sauginnenraum entsteht. Je nach Ausgestaltung entweicht die Luft z.B. seitlich zwischen Dichtabschnitt und Gegenstand, oder durch den Anschlussnippel. Der Sauggreifer wird dann zur Handhabung mittels der Handhabungsvorrichtung entgegen der Richtung der zuvor aufgebrachten äußeren Druckkraft angehoben. In dem initial angesaugten Zustand des Saugkörpers bewirkt das Anheben, dass die Gewichtskraft des Gegenstands als Zugkraft auf den Sauggreifer wirkt. Die Zugkraft bewirkt eine elastische Verformung des Saugkörpers, eine Erhöhung des Volumens des Sauginnenraumes und damit eine weitere Senkung des Druckniveaus im Sauginnenraum, so dass schließlich ein starker Unterdruck für eine ausreichende Haltekraft bereitgestellt wird.

In einem aktiven Betrieb des Sauggreifers wird der Sauggreifer an dem Werkstück angelegt und das Druckniveau im Sauginnenraum durch eine Pumpe, ein Gebläse, einen Ejektor oder einen Unterdruckspeicher abgesenkt, z.B. durch einen Fluidkanal im Anschlussnippel. Solange der derart aus dem Sauginnenraum abgesaugte Volumenstrom höher als ein durch Leckage zwischen dem Dichtabschnitt und Werkstück erzeugter Volumenstrom gehalten wird, ist ein zeitlich unbegrenztes Haften des Werkstückes an dem Sauggreifer möglich.

Sauggreifer mit den Merkmalen des Oberbegriffs des Anspruchs 1 sind aus der WO 2022/020176 A1 und der JP 5 950995 B2 bekannt.

Aufgabe der Erfindung ist es, einen Sauggreifer mit guten Halteeigenschaften bereitzustellen, so dass der Sauggreifer eine zuverlässige Handhabung von Gegenständen auf energetisch günstige Weise ermöglicht.

Die Aufgabe wird gelöst durch einen Sauggreifer gemäß Anspruch 1. Vorgeschlagen wird demnach ein Sauggreifer zum Ansaugen eines Gegenstands, insbesondere eines Werkstücks, wobei der Sauggreifer einen Saugkörper aufweist, der einen Sauginnenraum begrenzt, wobei der Saugkörper einen ersten Wandungsabschnitt und einen zweiten Wandungsabschnitt aufweist. Die Wandungsabschnitte sind über eine Falte miteinander verbunden. In dem ersten Wandungsabschnitt ist eine Saugöffnung ausgebildet, die der erste Wandungsabschnitt umgibt und durch die der Saugkörper (nach außen hin) offen ist. An dem zweiten Wandungsabschnitt ist ein Anschlussnippel angeordnet. Der Saugkörper ist derart flexibel ausgebildet, dass sich der erste Wandungsabschnitt beim Aufsetzen des Sauggreifers mit der Saugöffnung auf den anzusaugenden Gegenstand relativ zur Saugöffnung derart verformt, dass sich das von der Saugöffnung abgewandte Ende des ersten Wandungsabschnitts zum Gegenstand hin verlagert, bspw. durch eine Schwenk- oder Umklapp-Bewegung des ersten Wandungsabschnitts relativ zur Saugöffnung, so dass sich der erste Wandungsabschnitt mit seiner Außenseite zumindest abschnittsweise, vorzugweise vollständig, an den zu greifenden Gegenstand anlegt. Die Außenseite des ersten Wandungsabschnitts bildet zumindest abschnittsweise einen Dichtabschnitt aus.

Beim Aufsetzen des Sauggreifers auf den zu greifenden Gegenstand wird Luft, die sich zwischen dem ersten Wandungsabschnitt und dem Gegenstand befindet, insbesondere ausgehend von der Saugöffnung nach (radial) außen verdrängt bzw. gepresst. Zwischen der Außenseite des ersten Wandungsabschnitts und dem Gegenstand kann sich somit ein Dichtabschnitt bzw. eine Dichtfläche ausbilden. Die zwischen dem ersten Wandungsabschnitt und dem Gegenstand zuvor befindliche Luft muss durch den Sauggreifer nicht extra evakuiert werden, sondern wird beim Aufsetzen des Sauggreifers sozusagen "automatisch" verdrängt. Es ergeben sich ein geringeres Totvolumen und eine schnellere Evakuierung des Sauggreifers, insbesondere eine Vorevakuierung durch Andrücken des Sauggreifers auf den Gegenstand. Dadurch ist der Sauggreifer besonders energieeffizient.

Der Sauggreifer kann eine unangesaugte Konfiguration und eine angesaugte Konfiguration einnehmen, in der ein (angesaugter) Gegenstand am Sauggreifer haftet. In der unangesaugten Konfiguration kann der erste Wandungsabschnitt eine schalenförmige oder konische Gestalt aufweisen. In der angesaugten Konfiguration kann der erste Wandungsabschnitt eine scheibenförmige Gestalt aufweisen. Die unangesaugte Konfiguration und die angesaugte Konfiguration sind als Endkonfigurationen zu verstehen. Der Sauggreifer kann zwischen den Endkonfigurationen auch Zwischenkonfigurationen einnehmen.

Wenn der Saugkörper mit der Außenseite seines ersten Wandungsabschnitts bzw. mit seinem Dichtabschnitt an eine Oberfläche des Gegenstands dichtend angelegt und initial angedrückt wird, so kann der Saugkörper mit seinem Sauginnenraum gegen die Oberfläche des Gegenstands im Wesentlichen abgedichtet werden. Grundsätzlich kann dabei eine geringfügige Leckage aus dem Sauginnenraum möglich sein. Wenn der Sauggreifer dann mittels seines Anschlussnippels wieder in Richtung von der Gegenstandsoberfläche weggezogen wird und/oder wenn der Gegenstand aufgrund seiner Gewichtskraft an dem angelegten Sauggreifer zieht, so geht damit eine flexible, insbesondere auch elastische, Verformung des Saugkörpers einher. Der Unterschied im Volumen des Sauginnenraums zwischen einer Konfiguration, in der der Saugkörper initial an den Gegenstand angedrückt wird und einer Konfiguration, in der der Gegenstand durch den Saugkörper gehalten wird führt dann zur Ausbildung eines hohen Unterdrucks und somit eines sicheren Halts des Gegenstands am Sauggreifer.

Der Saugkörper kann zumindest teilweise oder vollständig aus einem flexiblen und/oder elastischen Material, insbesondere aus einem Elastomer, ausgebildet sein. Der Saugkörper kann insbesondere eine die Saugöffnung und den Sauginnenraum begrenzende Wandung aufweisen oder als eine die Saugöffnung und den Sauginnenraum begrenzende Wandung ausgebildet sein. Der Saugkörper kann ferner einen, insbesondere entlang seiner Höhe durchgehend, runden oder ovalen Querschnitt aufweisen. Dadurch ergibt sich ein Saugkörper, der in der unangesaugten Konfiguration bauchig geformt ist.

Dass der Anschlussnippel an dem den Sauginnenraum begrenzenden zweiten Wandungsabschnitt des Saugkörpers angeordnet ist kann insbesondere bedeuten, dass der zweite Wandungsabschnitt den Anschlussnippel umgibt, insbesondere um den Anschlussnippel herum verlaufend angeordnet ist. Vorzugsweise durchdringt der Anschlussnippel den genannten Wandungsabschnitt. Demgemäß ist mit dem zweiten Wandungsabschnitt insbesondere ein sich radial von dem Anschlussnippel weg erstreckender Wandungsabschnitt des Saugkörpers gemeint. Der Anschlussnippel kann dabei an einer Mitte des zweiten Wandungsabschnitts angeordnet sein.

Der zweite Wandungsabschnitt und/oder der Anschlussnippel sind insbesondere der Saugöffnung gegenüberliegend angeordnet, insbesondere sowohl bei Vorliegen der unangesaugten Konfiguration und der angesaugten Konfiguration des Saugkörpers.

Der Anschlussnippel kann insbesondere zum Befestigen des Sauggreifers an einer Handhabungsvorrichtung und/oder zur pneumatischen Verbindung des Sauginnenraums mit der Umgebung oder einer Unterdruckversorgung, insbesondere einer Pumpe, einem Gebläse, einem Ejektor und/oder einem Unterdruckspeicher, eingerichtet sein. Demgemäß kann der Sauggreifer einfach gehandhabt werden und/oder eine Evakuierung für einen aktiven Betrieb des Sauggreifers bereitgestellt werden.

Entsprechend kann vorgesehen sein, dass der Sauggreifer aktiv betrieben wird. Der Anschlussnippel kann entsprechend einen fluidische Verbindung zum Sauginnenraum aufweisen. Dadurch kann der Anschlussnippel an die Unterdruckversorgung angeschlossen eine Unterdruckverbindung des Sauginnenraumes mit der Unterdruckversorgung herstellen. Ein im Sauginnenraum angelegter Unterdruck bewirkt insbesondere, dass der Sauggreifer in der angesaugten Konfiguration oder in einer Zwischenkonfiguration verbleibt.

Der erste Wandungsabschnitt weist an seiner Außenseite an der Saugöffnung, und optional an seinem von der Saugöffnung abgewandten Ende jeweils, ein, insbesondere um den ersten Wandungsabschnitt umlaufendes, Dichtelement auf. Dies reduziert an der Außenseite des ersten Wandungsabschnitts bzw. am Dichtabschnitt auftretende Leckage. Das oder die Dichtelemente können jeweils als Dichtung oder als Dichtlippe ausgebildet sein.

Das Dichtelement ist an der Saugöffnung teilweise gasdurchlässig, insbesondere luftdurchlässig.

Dadurch wird die wirksame Fläche (Saugfläche) des Sauggreifers vergrößert. Somit kann nach dem Aufsetzen des Sauggreifers auf den Gegenstand auch an der Außenseite des ersten Wandungsabschnitts bzw. im Dichtabschnitt komplett evakuiert werden. Das Dichtelement kann hierzu bspw. insgesamt porös ausgebildet sein oder kleine Kanäle aufweisen, die sich durch das Dichtelement hindurch erstrecken.

Es kann vorgesehen sein, dass der erste Wandungsabschnitt gasdurchlässig bzw. luftdurchlässig ist und/oder dass im ersten Wandungsabschnitt kleine Kanäle ausgebildet sind, die sich von der Außenseite durch den Wandungsabschnitt hindurch zum Sauginnenraum erstrecken. Dadurch können eine oder mehrere Strömungsverbindungen von der Außenseite des ersten Wandungsabschnitts zum Saugrinnenraum gebildet werden. Der Unterdruck kann sich somit an der Außenseite bzw. im Dichtabschnitt verteilen und die Haltekraft erhöhen.

Es kann vorgesehen sein, dass der erste Wandungsabschnitt an seiner Außenseite (zusätzliche) Haftflächen, Reibflächen, Abdichtflächen, Mikrostrukturen und/oder Gecko-Strukturen aufweist. Somit können beim Aufsetzen des Sauggreifers auf das Werkstück zusätzliche Kräfte übertragen werden. Bspw. können Haftpads, Schaumstrukturen oder aufblasbare, weiche Strukturen vorgesehen sein.

Der erste Wandungsabschnitt kann einen Fortsatz aufweisen, mittels dem der erste Wandungsabschnitt an dem von der Saugöffnung abgewandten Ende über die Falte hinaus zumindest abschnittsweise verlängert ist. Dadurch kann der wirksame Teil der Außenseite bzw. der Dichtabschnitt vergrößert werden. Somit können höhere Kräfte (Greifkräfte) übertragen werden. Größere und/oder schwerere Gegenstände lassen sich somit besser greifen. "Abschnittsweise verlängert" bedeutet, dass der erste Wandungsabschnitt über seinen Umfang zumindest abschnittsweise, vorzugsweise vollständig umlaufend, verlängert ist.

Es kann vorgesehen sein, dass am Fortsatz mechanische Greifeinrichtungen zum Greifen und/oder Umschließen des anzusaugenden Gegenstands angebracht sind. Dies begünstigt ein sicheres Greifen des Gegenstands. Die mechanischen Greifeinrichtungen können Finger und/oder Finrays aufweisen oder als Finger und/oder Finray ausgebildet sein.

Es kann vorgesehen sein, dass im ersten Wandungsabschnitt (weitere) Kanäle ausgebildet sind, welche sich vom Sauginnenraum bis zur Außenseite des Fortsatzes des ersten Wandungsabschnitts erstrecken. Auch dies trägt zu einem zuverlässigen Ansaugen des Gegenstands bei, da Unterdruck in die Außenbereiche des ersten Wandungsabschnitts geleitet werden kann (große wirksame Saugfläche).

Es kann vorgesehen sein, dass der erste Wandungsabschnitt derart ausgebildet ist, dass sich im an den Gegenstand angelegten Zustand an der Außenseite des ersten Wandungsabschnitts eine ausgehend von der Saugöffnung nach (radial) außen abfallende bzw. kegelförmige Kontur ergibt. Somit kann wie bei einem Bernoulli-Sauggreifer durch die in Richtung Zentrum strömende Luft zusätzlicher Unterdruck generiert werden. Dies trägt zu einem zuverlässigen Ansaugen des Gegenstands am Sauggreifer bei. Die von der Saugöffnung nach (radial) außen abfallende bzw. kegelförmige Kontur kann durch entsprechende Formgebung des ersten Wandungsabschnitts oder durch Reduzieren der Dicke des ersten Wandungsabschnitts ausgebildet sein.

In der Saugöffnung des Saugkörpers kann ein Einlegeteil angeordnet sein, welches die Saugöffnung verschließt und ein ansteuerbares Ventil oder ein Rückschlagventil aufweist. Somit kann der Sauggreifer auch in einem passiven Betrieb betrieben werden, in dem kein zusätzlicher Vakuumerzeuger nötig ist. Das Erzeugen von Unterdruck erfolgt dabei durch initiales Andrücken des Sauggreifers auf den anzusaugenden Gegenstand und ggf. durch anschließendes Anheben des Gegenstands mittels des Sauggreifers. Das Einlegeteil stellt insbesondere ein zusätzliches Dichtelement dar. Neben einem ansteuerbaren Ventil oder Rückschlagventil kann das Einlegeteil ggf. eine Sensorik, bspw. einen Drucksensor, aufweisen. Auch eine Strömungsführung vom Sauginnenraum zur Außenfläche kann vorgesehen sein.

Es kann vorgesehen sein, dass der (maximale) Querschnitt des Sauginnenraums des Saugkörpers geringer ist als die wirksame Saugfläche an der Außenfläche des Sauggreifers im an den Gegenstand angelegten Zustand des Sauggreifers. Dies trägt zu einem günstigen Verhältnis zwischen innerem Volumen des Sauginnenraums und dem Dichtungsabschnitt bzw. der Saugfläche bei. Dies begünstigt einen energetisch effizienten Betrieb.

Es kann vorgesehen sein, dass der zweite Wandungsabschnitt als Faltenbalg mit zumindest einer Außenfalte und zumindest einer Innenfalte ausgebildet ist. Insbesondere kann der Faltenbalg auch mit zumindest zwei oder mehr Außenfalten und zumindest zwei oder mehr Innenfalten ausgebildet sein. Der Saugkörper weist an den Innenfalten einen kleineren Umfang, und im Falle eines runden Querschnitts einen kleineren Durchmesser, als an den Außenfalten auf. Durch Auffalten des Faltenbalges ist ein besonders großes maximales Volumen des Sauginnenraumes des Saugkörpers erzielbar.

Es kann vorgesehen sein, dass der zweite Wandungsabschnitt zumindest bereichsweise steifer als der erste Wandungsabschnitt ausgebildet ist. Dies ermöglicht eine hohe Stabilität an dem zweiten Wandungsabschnitt und eine hohe Flexibilität an dem ersten Wandungsabschnitt. So kann die hohe Flexibilität des ersten Wandungsabschnittes für eine schnelle und energiesparsame Verformung des ersten Wandungsabschnittes zum Wechsel aus der unangesaugten Konfiguration in Richtung zu der angesaugten Konfiguration des Saugkörpers genutzt werden. Demgegenüber kann der zweite Wandungsabschnitt den Saugkörper insgesamt und ganz besonders beim Anlegen an den anzusaugenden Gegenstand stabilisieren.

Weitere Einzelheiten und vorteilhafte Ausgestaltungen der Erfindung sind der nachfolgenden Beschreibung zu entnehmen, anhand derer Ausführungsbeispiele der Erfindung näher beschrieben und erläutert werden.

Es zeigen:
- Figur 1: eine Querschnittsansicht eines Sauggreifers in einer unangesaugten Konfiguration;
- Figur 2: eine Querschnittsansicht des Sauggreifers aus Fig.1 in einer angesaugten Konfiguration;
- Figur 3: eine Querschnittsansicht einer Ausgestaltungsmöglichkeit des Sauggreifers aus Fig.1 in einer unangesaugten Konfiguration;
- Figur 4: eine Querschnittsansicht des Sauggreifers aus Fig.3 in einer unangesaugten Konfiguration;
- Figur 5: eine Querschnittsansicht einer Ausgestaltungsmöglichkeit des Sauggreifers aus Fig.3.

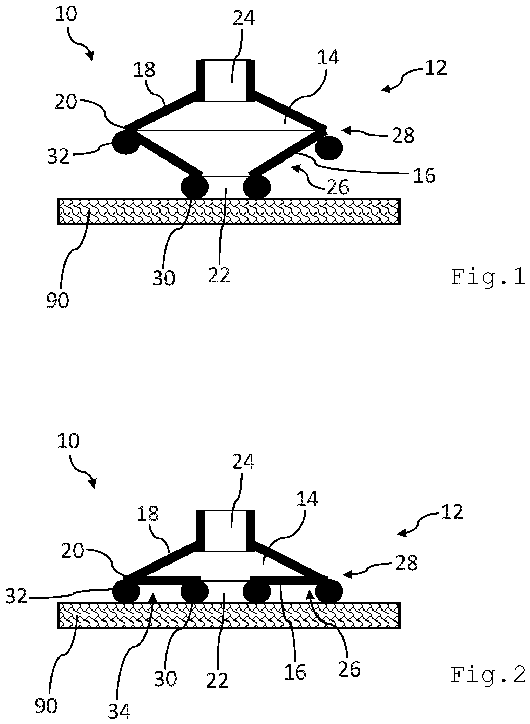

Figur 1 zeigt eine Querschnittsansicht eines Sauggreifers 10 in einer unangesaugten Konfiguration, in der der Sauggreifer 10 einen anzusaugenden Gegenstand 90 berührt, diesen aber noch nicht ansaugt (Sauggreifer 10 liegt gerade am Gegenstand 90 an). Der Sauggreifer 10 weist einen Saugkörper 12 auf. Der Saugkörper 12 ist im Beispiel insgesamt elastisch und flexibel ausgebildet. Beispielsweise kann der Saugkörper 12 aus einem Elastomer ausgebildet sein. Der Saugkörper 12 kann vorliegend auch als eine Wandung verstanden werden.

Der Saugkörper 12 begrenzt einen Sauginnenraum 14. Der Saugkörper 12 weist einen ersten Wandungsabschnitt 16 und einen zweiten Wandungsabschnitt 18 auf, wobei die Wandungsabschnitte 16, 18 über eine Falte 20 miteinander verbunden sind.

In dem ersten Wandungsabschnitt 16 ist eine Saugöffnung 22 ausgebildet, die der erste Wandungsabschnitt 16 umgibt und durch die der Saugkörper 12 nach außen, d.h. zur Umgebung hin offen ist. Die Saugöffnung 22 ist im Beispiel mittig des ersten Wandungsabschnitts 16 angeordnet.

An dem zweiten Wandungsabschnitt 18 ist ein Anschlussnippel 24 angeordnet. Der Anschlussnippel 24 ist im Beispiel mittig des zweiten Wandungsabschnitts 18 angeordnet. Der Anschlussnippel 24 ist im Beispiel in den zweiten Wandungsabschnitt 18 eingefasst. An dem Anschlussnippel 24 kann eine nicht gezeigte Handhabungsvorrichtung angeschlossen werden, um den Sauggreifer 10 zu bewegen. Wenn der Sauggreifer 10 den Gegenstand 90 angesaugt hat, lässt sich darüber auch der
Gegenstand 90 handhaben.

Der erste Wandungsabschnitt 16 weist an seiner Außenseite 26 an der Saugöffnung 22 im Beispiel ein um den ersten Wandungsabschnitt 16 umlaufendes, Dichtelement 30 auf. Weiter weist der erste Wandungsabschnitt 16 an seiner Außenseite 26 an seinem von der Saugöffnung 22 abgewandten Ende 28 ein weiteres, um den ersten Wandungsabschnitt 16 umlaufendes Dichtelement 32 auf. Die Dichtelemente 30, 32 können jeweils als Dichtung oder Dichtlippe ausgebildet sein.

Das Dichtelement 30 an der Saugöffnung 22 kann gasdurchlässig bzw. luftdurchlässig sein, bspw. durch poröse Ausgestaltung oder durch im Dichtelement 30 ausgebildete Kanäle (nicht gezeigt). Der erste Wandungsabschnitt 16 selbst kann ebenfalls gasdurchlässig ausgebildet sein. Alternativ oder ergänzend können im ersten Wandungsabschnitt 16 Kanäle ausgebildet sein, die sich von der Außenseite 26 durch den Wandungsabschnitt 16 hindurch zum Sauginnenraum 14 erstrecken (nicht gezeigt). Optional kann der erste Wandungsabschnitt 16 an seiner Außenseite 26 Haftflächen, Reibflächen, Abdichtflächen, Mikrostrukturen und/oder Gecko-Strukturen aufweisen, wie oben erläutert (nicht dargestellt).

Der erste Wandungsabschnitt 16 kann derart ausgebildet sein, dass sich (wie beim einem Bernoulli-Sauggreifer) im an den Gegenstand 90 angelegten Zustand an der Außenseite 26 des ersten Wandungsabschnitts 16 eine ausgehend von der Saugöffnung 22 nach außen abfallende Kontur ergibt, wie oben erläutert (nicht gezeigt).

Im Beispiel ist der zweite Wandungsabschnitt 18 zumindest bereichsweise steifer als der erste Wandungsabschnitt 16 ausgebildet. Der zweite Wandungsabschnitt 18 kann als Faltenbalg mit zumindest einer Außenfalte und zumindest einer Innenfalte ausgebildet sein (nicht gezeigt).

Wie oben bereits erläutert, zeigt Fig.1 eine unangesaugte Konfiguration des Sauggreifers 10, in der der Sauggreifer 10 mit der Saugöffnung 22 am anzusaugenden Gegenstand 90 anliegt, diesen jedoch (noch) nicht ansaugt. Der erste Wandungsabschnitt 16 weist in dieser Konfiguration eine schalenförmige Gestalt auf (vgl. Fig.1).

Der Saugkörper 12 ist derart flexibel ausgebildet, dass sich der erste Wandungsabschnitt 16 beim Aufsetzen des Sauggreifers 10, bspw. durch entsprechendes Andrücken, mit der Saugöffnung 22 auf den anzusaugenden Gegenstand 90 relativ zur Saugöffnung 22 derart verformt, dass sich das von der Saugöffnung 22 abgewandte Ende 28 des ersten Wandungsabschnitts 16 zum anzusaugenden Gegenstand 90 hin verlagert, so dass sich der erste Wandungsabschnitt 16 mit seiner Außenseite 26 zumindest abschnittsweise an den zu greifenden Gegenstand 90 anlegt. Der erste Wandungsabschnitt 16 weist in dieser Konfiguration eine scheibenförmige Gestalt auf (vgl. Fig.2).

Beim Aufsetzen und Andrücken des Sauggreifers 10 auf den anzusaugenden Gegenstand 90 (Übergang von Fig.1 zu Fig.2) wird Luft, die sich zwischen dem ersten Wandungsabschnitt 16 und dem anzusaugenden Gegenstand 90 befindet, ausgehend von der Saugöffnung 22 nach radial außen verdrängt. Zwischen der Außenseite 26 des ersten Wandungsabschnitts 16 und dem Gegenstand 90 bildet sich somit ein Dichtabschnitt bzw. eine Dichtfläche 34 ausbilden. Der Gegenstand 90 ist somit durch den Sauggreifer 10 angesaugt (vgl. Fig.2).

Anhand eines Vergleichs von Fig.1 und Fig.2 ist erkennbar, dass der maximale Querschnitt des Sauginnenraums 14 des Saugkörpers 12 geringer ist als die wirksame Saugfläche bzw. Dichtfläche 34 an der Außenfläche 26 des Sauggreifers 10 im angelegten Zustand des Sauggreifers 10.

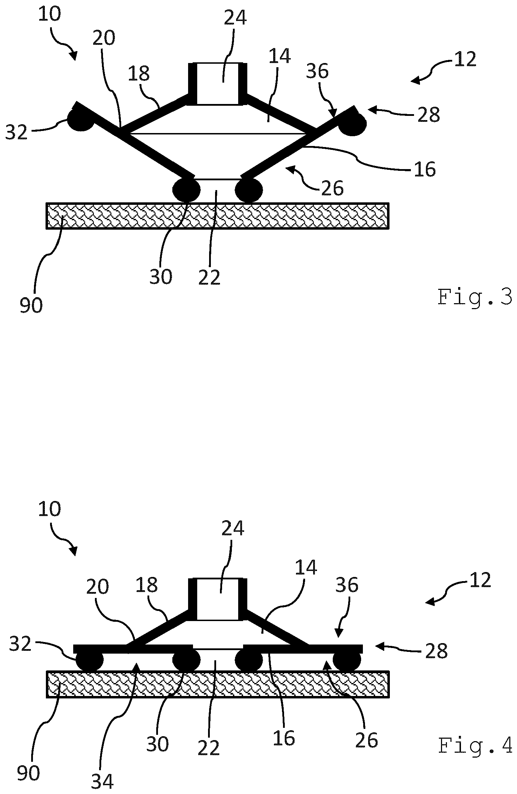

Die Figuren 3 und 4 zeigen eine Ausgestaltungsmöglichkeit des voranstehend beschriebenen Sauggreifers 10. Der vorliegende Sauggreifer 10 entspricht weitgehend dem mit Bezug zu den Figuren 1 und 2 beschriebenen Sauggreifer 10, so dass zur Vermeidung von Wiederholungen auf die dortigen Ausführungen verwiesen wird.

Im Unterschied dazu weist der erste Wandungsabschnitt 16 einen Fortsatz 36 auf, mittels dem der erste Wandungsabschnitt 16 an dem von der Saugöffnung 22 abgewandten Ende 28 über die Falte 20 hinaus zumindest abschnittsweise, im Beispiel jedoch vollständig umlaufend verlängert ist. Das weitere Dichtelement 32 ist im Beispiel am von der Saugöffnung 22 abgewandten Ende 28 des ersten Wandungsabschnitts 16 angeordnet und befindet sich somit ebenfalls im Bereich des Fortsatzes. Wie anhand von Fig.3 und 4 erkennbar, ist durch den Fortsatz 36 der sich ergebende Dichtabschnitt bzw. die Dichtfläche 34 vergrößert.

Am Fortsatz 36 können mechanische Greifeinrichtungen zum Greifen und/oder Umschließen des anzusaugenden Gegenstands 90 angebracht sein, wie oben erläutert (nicht gezeigt). Unabhängig davon können im ersten Wandungsabschnitt 16 Kanäle ausgebildet sein, welche sich vom Sauginnenraum 14 bis zur Außenseite 26 des Fortsatzes 36 des ersten Wandungsabschnitts 16 erstrecken. Damit kann Unterdruck in die radial äußeren Bereiche des ersten Wandungsabschnitts 16 geleitet werden.

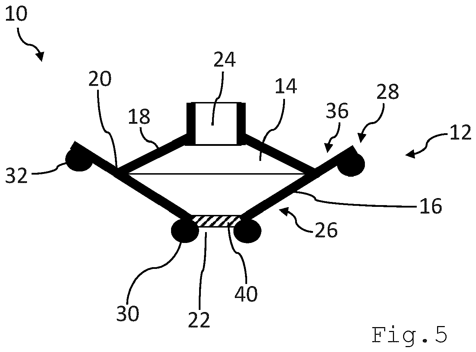

Figur 5 zeigt eine Ausgestaltungsmöglichkeit des mit Bezug auf die Figuren 3 und 4 beschriebenen Sauggreifers 10. Der Sauggreifer entspricht weitgehend der voranstehend beschriebenen Ausführungsform, so dass zur Vermeidung von Wiederholungen auf die dortigen Ausführungen verwiesen wird.

Im Unterschied dazu ist in der Saugöffnung 22 ein Einlegeteil 40 angeordnet, welches die Saugöffnung 22 verschließt und ein ansteuerbares Ventil oder Rückschlagventil aufweist (nicht gezeigt). Das Einlegeteil 40 stellt ein zusätzliches Dichtelement dar. Neben einem ansteuerbaren Ventil oder Rückschlagventil kann das Einlegeteil 40 ggf. eine Sensorik, bspw. einen Drucksensor, aufweisen. Auch eine Strömungsführung vom Sauginnenraum 14 zur Außenfläche 26 kann vorgesehen sein (nicht dargestellt).

Es versteht sich, dass auch der mit Bezug auf die Figuren 1 und 2 beschriebene Sauggreifer 10 mit einem Einlegeteil 40 ausgestattet werden kann.

## Patentansprüche

1. Sauggreifer (10) zum Ansaugen eines Gegenstands (90), insbesondere eines Werkstücks (90), wobei der Sauggreifer (10) einen Saugkörper (12) aufweist, der einen Sauginnenraum (14) begrenzt, wobei der Saugkörper (12) einen ersten Wandungsabschnitt (16) und einen zweiten Wandungsabschnitt (18) aufweist, wobei die Wandungsabschnitte (16, 18) über eine Falte (20) miteinander verbunden sind, wobei in dem ersten Wandungsabschnitt (16) eine Saugöffnung (22) ausgebildet ist, die der erste Wandungsabschnitt (16) umgibt und durch die der Saugkörper (12) offen ist, und wobei an dem zweiten Wandungsabschnitt (18) ein Anschlussnippel (24) angeordnet ist, wobei der Saugkörper (12) derart flexibel ausgebildet ist, dass sich der erste Wandungsabschnitt (16) beim Aufsetzen des Sauggreifers (10) mit der Saugöffnung (22) auf den anzusaugenden Gegenstand (90) relativ zur Saugöffnung (22) derart verformt, dass sich das von der Saugöffnung (22) abgewandte Ende (28) des ersten Wandungsabschnitts (16) zum Gegenstand (90) hin verlagert, so dass sich der erste Wandungsabschnitt (16) mit seiner Außenseite (26) zumindest abschnittsweise an den zu greifenden Gegenstand (90) anlegt, wobei
der erste Wandungsabschnitt (16) an seiner Außenseite (26) an der Saugöffnung (22) ein Dichtelement (30) aufweist,
**dadurch gekennzeichnet, dass**
das Dichtelement (30) an der Saugöffnung (22) teilweise gasdurchlässig ist.

2. Sauggreifer (10) nach Anspruch 1, **dadurch gekennzeichnet, dass** der erste Wandungsabschnitt (16) an seinem von der Saugöffnung (22) abgewandten Ende (28) ein, insbesondere um den ersten Wandungsabschnitt (16) umlaufendes, Dichtelement (32) aufweist.

3. Sauggreifer (10) nach einem der voranstehenden Ansprüche, **dadurch gekennzeichnet, dass** der erste Wandungsabschnitt (16) gasdurchlässig ist und/oder dass im ersten Wandungsabschnitt (16) Kanäle ausgebildet sind, die sich von der Außenseite (26) durch den Wandungsabschnitt (16) hindurch zum Sauginnenraum (14) erstrecken.

4. Sauggreifer (10) nach einem der voranstehenden Ansprüche, **dadurch gekennzeichnet, dass** der erste Wandungsabschnitt (16) derart ausgebildet ist, dass sich im an den Gegenstand (90) angelegten Zustand an der Außenseite (26) des ersten Wandungsabschnitts (16) eine ausgehend von der Saugöffnung (22) kegelförmige ergibt.

5. Sauggreifer (10) nach einem der voranstehenden Ansprüche, **dadurch gekennzeichnet, dass** der zweite Wandungsabschnitt (18) als Faltenbalg mit zumindest einer Außenfalte und zumindest einer Innenfalte ausgebildet ist.

6. Sauggreifer (10) nach einem der voranstehenden Ansprüche, **dadurch gekennzeichnet, dass** der zweite Wandungsabschnitt (18) zumindest bereichsweise steifer als der erste Wandungsabschnitt (16) ausgebildet ist.

## Claims

1. Suction gripper (10) for suctioning an object (90), in particular a workpiece (90), the suction gripper (10) comprising a suction body (12) which delimits a suction chamber (14), the suction body (12) comprising a first wall portion (16) and a second wall portion (18), the wall portions (16, 18) being connected to one another via a fold (20), a suction opening (22) being formed in the first wall portion (16), which opening is surrounded by the first wall portion (16) and through which the suction body (12) is open, and a connection fitting (24) being arranged on the second wall portion (18), the suction body (12) being designed to be flexible in such a way that, when the suction gripper (10) is placed with the suction opening (22) on the object (90) to be suctioned, the first wall portion (16) deforms relative to the suction opening (22) in such a way that the end (28) of the first wall portion (16) facing away from the suction opening (22) is displaced toward the object (90) such that the first wall portion (16) at least partially rests with its outer side (26) against the object (90) to be gripped, the first wall portion (16) comprising a sealing element (30) on its outer side (26) at the suction opening (22),
**characterized in that**
the sealing element (30) at the suction opening (22) is partially gas-permeable.

2. Suction gripper (10) according to claim 1, **characterized in that** the first wall portion (16) comprises, at its end (28) facing away from the suction opening (22), a sealing element (32) which in particular extends around the first wall portion (16).

3. Suction gripper (10) according to any of the preceding claims, **characterized in that** the first wall portion (16) is gas-permeable and/or **in that** channels are formed in the first wall portion (16), which extend from the outer side (26) through the wall portion (16) to the suction chamber (14).

4. Suction gripper (10) according to any of the preceding claims, **characterized in that** the first wall portion (16) is designed in such a way that, when applied to the object (90), a conical is formed on the outer side (26) of the first wall portion (16), starting from the suction opening (22).

5. Suction gripper (10) according to any of the preceding claims, **characterized in that** the second wall portion (18) is designed as a bellows having at least one outer fold and at least one inner fold.

6. Suction gripper (10) according to any of the preceding claims, **characterized in that** the second wall portion (18), at least in portions, is stiffer than the first wall portion (16).

## Revendications

1. Ventouse (10) pour aspirer un objet (90), en particulier une pièce (90), dans laquelle la ventouse (10) présente un corps d'aspiration (12) qui délimite un espace intérieur d'aspiration (14), dans laquelle le corps d'aspiration (12) présente une première section de paroi (16) et une deuxième section de paroi (18), dans laquelle les sections de paroi (16, 18) sont reliées entre elles par l'intermédiaire d'un pli (20), dans laquelle une ouverture d'aspiration (22) est réalisée dans la première section de paroi (16), que la première section de paroi (16) entoure et par laquelle le corps d'aspiration (12) est ouvert, et dans laquelle un mamelon de raccordement (24) est disposé sur la deuxième section de paroi (18), dans laquelle le corps d'aspiration (12) est réalisé de manière flexible de telle sorte que la première section de paroi (16) se déforme par rapport à l'ouverture d'aspiration (22) lors de la mise en place de la ventouse (10) avec l'ouverture d'aspiration (22) sur l'objet (90) à aspirer, que l'extrémité (28) de la première section de paroi (16) opposée à l'ouverture d'aspiration (22) se déplace vers l'objet (90), de sorte que la première section de paroi (16) s'applique avec son côté extérieur (26) au moins par sections contre l'objet à saisir (90), dans laquelle la première
section de paroi (16) présente un élément d'étanchéité (30) sur son côté extérieur (26) au niveau de l'ouverture d'aspiration (22), **caractérisée en ce que** l'élément d'étanchéité (30) est partiellement perméable au gaz au niveau de l'ouverture d'aspiration (22).

2. Ventouse (10) selon la revendication 1, **caractérisée en ce que** la première section de paroi (16) présente, à son extrémité (28) opposée à l'ouverture d'aspiration (22), un élément d'étanchéité (32) fait en particulier tout le tour de la première section de paroi (16).

3. Ventouse (10) selon l'une quelconque des revendications précédentes, **caractérisée en ce que** la première section de paroi (16) est perméable aux gaz et/ou **en ce que** des canaux sont réalisés dans la première section de paroi (16), lesquels s'étendent depuis le côté extérieur (26) à travers la section de paroi (16) vers l'espace intérieur d'aspiration (14).

4. Ventouse (10) selon l'une quelconque des revendications précédentes, **caractérisée en ce que** la première section de paroi (16) est réalisée de telle sorte qu'à l'état appliqué sur l'objet (90), on obtient sur le côté extérieur (26) de la première section de paroi (16) une forme conique partant de l'ouverture d'aspiration (22).

5. Ventouse (10) selon l'une quelconque des revendications précédentes, **caractérisée en ce que** la deuxième section de paroi (18) est réalisée comme un soufflet avec au moins un pli extérieur et au moins un pli intérieur.

6. Ventouse (10) selon l'une quelconque des revendications
précédentes, **caractérisée en ce que** la deuxième section de paroi (18) est réalisée au moins par endroits de manière plus rigide que la première section de paroi (16).
